(19) Europäisches Patentamt

European Patent Office

Office européen des brevets

(11) **EP 4 074 427 B1**

(12) **EUROPÄISCHE PATENTSCHRIFT**

(45) Veröffentlichungstag und Bekanntmachung des Hinweises auf die Patenterteilung:
**13.08.2025   Patentblatt 2025/33**

(21) Anmeldenummer: **22168194.3**

(22) Anmeldetag: **13.04.2022**

(51) Internationale Patentklassifikation (IPC):
**B08B 3/02** (2006.01)       **B08B 5/02** (2006.01)
**B29C 64/35** (2017.01)      **B22F 10/68** (2021.01)
**B33Y 40/20** (2020.01)

(52) Gemeinsame Patentklassifikation (CPC):
**B29C 64/35; B08B 3/024; B08B 5/02; B22F 10/68;**
**B33Y 40/20;** B29C 64/153; B29C 64/165;
B33Y 10/00

(54) **WERKSTÜCK-REINIGUNGSVORRICHTUNG, REINIGUNGSVERFAHREN UND FERTIGUNGSVERFAHREN**

WORKPIECE CLEANING APPARATUS, CLEANING METHOD AND MANUFACTURING METHOD

DISPOSITIF DE NETTOYAGE DES PIÈCES, PROCÉDÉ DE NETTOYAGE ET PROCÉDÉ DE FABRICATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:   **13.04.2021   DE 202021001343 U**

(43) Veröffentlichungstag der Anmeldung:
**19.10.2022   Patentblatt 2022/42**

(73) Patentinhaber: **Volkmann GmbH**
**59494 Soest (DE)**

(72) Erfinder: **SÜMMERMANN, Konrad**
**59494 Soest (DE)**

(74) Vertreter: **Grosse Schumacher Knauer von Hirschhausen**
**Patent- und Rechtsanwälte**
**Schloss Schellenberg - Backhaus**
**Renteilichtung 1**
**45134 Essen (DE)**

(56) Entgegenhaltungen:
CN-A- 106 423 927          DE-A1- 102016 121 773
DE-A1- 102018 118 067    DE-A1- 102019 000 043
US-A1- 2019 202 126

## Beschreibung

GEBIET DER ERFINDUNG

Die Erfindung betrifft eine Reinigungsvorrichtung nach Anspruch 1. Die Vorrichtung ist zum Reinigen eines mittels additiver Fertigung aus einem granularen und/oder pulvrigen Fertigungsmaterial gefertigten Werkstücks und/oder zum Entfernen von überschüssigem granularem und/oder pulvrigem Fertigungsmaterial nach einer additiven Werkstückfertigung. Insofern kann die Vorrichtung als Entpulverungsvorrichtung gebildet sein. Das Fertigungsmaterial kann ein Kunststoff- oder Metall-Pulver oder -Granulat sein. Die Reinigungsvorrichtung kann in einer Werkstückfertigungs-Anlage (3D-Drucker) integriert oder darin integrierbar sein oder Bestandteil einer aus mehreren Komponenten gebildeten 3D-Werkstück-Fertigungsstraße. Die Vorrichtung umfasst ein, insbesondere fluiddichtes, Gehäuse, in dem eine Werkstückhalterung angeordnet ist, auf dem oder an der das gefertigte (gedruckte) Werkstück anordbar ist. Die Werkstückhalterung kann beispielsweise als Baurahmen oder (fluiddichte) Baukammer für das Werkstücks gebildet sein. In oder an dem Gehäuse ist zumindest eine Fördervorrichtung zum Abfördern von, insbesondere überschüssigem, Fertigungsmaterial aus dem Gehäuseinneren angeordnet. In dem Gehäuseinneren ist zumindest eine bewegbare Düse an zumindest einem bewegbaren Düsenarm angeordnet. Das Werkstück und das Gehäuseinnere sind während eines Reinigungszyklus, bei dem Werkstück und/oder Gehäuseinneres von, insbesondere überschüssigem, Fertigungsmaterial gereinigt werden, mit zumindest einer Reinigungsfluid-Strömung beaufschlagbar.

Die Erfindung betrifft außerdem ein Reinigungsverfahren nach Anspruch 17. und ein Werkstück-Fertigungsverfahren nach Anspruch 18.

TECHNOLOGISCHER HINTERGRUND

Additive Fertigungsverfahren werden insbesondere in der industriellen Fertigung zunehmend relevanter. Der Fertigungs-Rohstoff respektive das Fertigungsmaterial ist meist granular oder pulvrig und in einem Fertigungsverfahren wird aus dem granularen oder pulvrigen Material ein 3-dimmensonales Werkstück gefertigt. Nach der Fertigung ist entweder eine Nach- oder Weiterbehandlung oder eine Verwendung des Werkstücks vorgesehen. Zuvor soll das Werkstück von Pulverresten gereinigt werden. Dies kann in einem Luft- oder Gasstrom erfolgen. Problematisch dabei ist eine mögliche Kontamination der Umgebung der Luft-/Gas-Reinigung sowie die Qualität der Reinigung: Nicht immer werden alle Flächenelemente des Werkstücks mit der Luft-/Gas-Strömung beaufschlagt und es verbleiben nach der Reinigung Rückstände des Fertigungsmaterials am Werkstück. Es hat sich daher bewährt, das Werkstück einer Entpulverung zuzuführen, welche in einem abgeschlossenen Behälter stattfindet. Dies ist jedoch zeit- und kostenintensiv.

Das Dokument DE-A1-102018118067 offenbart eine Vorrichtung zum Reinigen eines mittels additiver Fertigung aus einem granularen und/oder pulvrigen Fertigungsmaterial gefertigten Werkstücks und/oder zum Entfernen von überschüssigem granularem und/oder pulvrigem Fertigungsmaterial nach einer additiven Werkstückfertigung, wobei die Vorrichtung ein Gehäuse umfasst, in dem eine Werkstückhaltering angeordnet ist, in oder an dem Gehäuse zumindest eine Fördervorrichtung zum Abfördern von überschüssigem Fertigungsmaterial aus dem Gehäuseinnern angeordnet ist, und in dem Gehäuseinnern zumindest eine bewegbare Düse an zumindest einem bewegbaren Düsenarm angeordnet ist, wobei zumindest eine Düsenrotation vorgesehen ist, bei der die Düse um zumindest eine Düsen-Rotationsachse relativ zum Düsenarm rotierbar ist, und zumindest eine Arm-Rotation vorgesehen ist, bei der der Düsenarm um eine Arm-Rotationsachse relativ zur Werkstückhalterung rotierbar ist.

DARSTELLUNG DER ERFINDUNG

Vor diesem Hintergrund besteht die Aufgabe der Erfindung darin, Maßnahmen anzugeben, mit denen das Reinigen eines additiv hergestellten Werkstücks von Fertigungsmaterialrückständen effizient und kosten- sowie zeit-einsparend gelingt. Diese Aufgabe wir durch eine Reinigungsvorrichtung nach Anspruch 1 gelöst. Weitere Ausgestaltungen der Erfindung ergeben sich aus den Neben- und Unteransprüchen. Bei der Reinigungsvorrichtung nach Anspruch 1 ist zumindest eine Düsenrotation vorgesehen, bei der die Düse um zumindest eine Düsen-Rotationsachse relativ zum Düsenarm rotierbar ist. Es ist außerdem zumindest eine Arm-Bewegung und/oder zumindest Armrotation vorgesehen, bei der der Düsenarm um zumindest entlang einer Arm-Bahn und/oder um zumindest eine Arm-Rotationsachse relativ zur Werkstückhalterung bewegbar und/oder rotierbar ist. Die Orientierungen der Düsen-Rotationsachse und der Arm-Rotationsachse können sich unterscheiden. Beispielsweise kann die Düsen-Rotationsachse senkrecht oder nahezu senkrecht auf der Düsenarm-Rotationsachse stehen. Die Rotationsgeschwindigkeiten der Düsenrotation und die Geschwindigkeit der Armbewegung und/oder der Armrotation sind dabei so gebildet, dass während eines Reinigungszyklus die Reinigungsfluid-Strömung alle oder nahezu alle Strömungsrichtungen innerhalb des Gehäuseinneren annimmt, sodass die gesamte oder nahezu gesamte Oberfläche des Werkstücks und des Gehäuseinneren mit der Reinigungs-Strömung aus allen oder nahezu allen Richtungen beaufschlagbar ist. Ein Reinigungszyklus ist etwa der Zeitraum, in dem das Werkstück ausreichend gereinigt, d. h. entpulvert wird. Indem auch das Gehäuseinnere mit dem Reinigungsfluid direkt angeströmt wird, wird ein Rückstauben vermieden, d. h. eine Kontamination des Werkstücks durch Pulverreste im Gehäuseinneren. Diese Pulverreste können dort durch den Reinigungsvorgang selbst oder durch einen vorausgegangenen Reinigungsvorgang angelagert werden. Mit der beschriebenen Vorrichtung wird insbesondere vermieden, dass die Reste einer Reinigung eines ersten Werkstücks ein anschließend zu reinigendes zweites Werkstück kontaminieren. Indem die Düse rotiert und der Arm, an dem die Düse angeordnet ist, umfasst der Vektorraum aller Reinigungsfluid-Strömungs-Vektoren während eines Reinigungszyklus den vollen Raumwinkel (4 $\pi$) oder nahezu den vollen Raumwinkel ($\approx 4\,\pi$, wobei ein Raumwinkel ein - mathematisch beschreibbarer - Anteil am gesamten dreidimensionalen Raum ist). Es kann zweckmäßig sein, wenn eine Einrichtung zum Einschleusen des Werkstücks in die Reinigungsvorrichtung vorgesehen ist, damit eine Kontamination der Umgebung der Reinigungsvorrichtung vermieden wird.

Bevorzugt bewirkt die die Arm-Bewegung und/oder die Armrotation, dass sich die rotierende Düse entlang einer runden, kreisrunden, ovalen, rechteckigen oder nahezu rechteckigen oder frei geformten Bahn um die Werkstückhalterung und zwischen Werkstückhalterung und Gehäusewand bewegt. Beispielsweise kann die Bahn rechteckig mit abgerundeten Ecken sein. Insbesondere bei einem rechteckigen Rahmen folgt der Düsenarm im Wesentlichen der Form des Rahmens. Dazu kann eine entsprechende Verzahnung vorgesehen sein, die entlang der Arm-Bahn angeordnet ist. Je nach Ausgestaltung der Vorrichtung können Rahmen und somit Arm-Bahn längenvariabel beschaffen sein. Der Düsenarm der Vorrichtung bewegt demnach die rotierende Düse um das Werkstück respektive um die Werkstückhalterung entlang einer Bahn herum. Indem Düsenarm und Düse selbst rotieren, werden alle oder nahezu alle Flächenelemente des Werkstücks durch die Fluidströmung beaufschlagt. Dies bewirkt, dass sämtliche oder nahezu sämtliche Fertigungsmaterial- respektive Pulver-Reste am Werkstück und an der Gehäusewand von der Fluidströmung erfasst werden und zumindest vom Werkstück entfernt werden. Bereits nach einem Reinigungszyklus ist das Werkstück entpulvert und kann der Weiterverarbeitung respektive Verwertung zugeführt werden.

Indem die Düse und der Düsenarm in der beschriebenen Weise rotieren, wird nicht nur das Werkstück vor Fertigungsmaterial-Resten respektive -Verunreinigungen gereinigt, sondern auch die Reinigungsvorrichtung selbst, d. h. das Gehäuseinnere der Vorrichtung. Dieser Aspekt der Reinigung ist insofern von erheblicher Bedeutung für das Reinigungsergebnis, als dadurch eine Rekontamination des Werkstücks während eines Reinigungszyklus verhindert wird, welche darauf zurückzuführen ist, dass Fertigungsmaterialrückstände am Gehäuseinneren das darin angeordnete Werkstück während der Reinigung kontaminieren. Außerdem kann eine "Kreuzkontamination" vermieden werden, d. h. eine Kontamination von Fertigungsmaterial-Verunreinigungen eines ersten Werkstückes, entstanden während eines ersten Reinigungszyklus und dazu geeignet, ein zweites Werkstück, welches sich in einem anschließenden, zweiten Reinigungszyklus befindet, zu kontaminieren.
Bevorzugt können Düsenrotation und Arm-Bewegung und/oder Armrotation gekoppelt sein. Während einer Umdrehung der Armrotation erflogt eine einstellbare konstante oder eine einstellbare veränderbare oder eine nicht einstellbare variable oder beliebige Anzahl von Umdrehungen der Düsenrotation. Beispielsweise kann die Düse während einer Armumdrehung x Düsenumdrehungen machen, wobei x eine natürliche Zahl, insbesondere größer 1, sein kann ( $x \in \mathbb{N}$ ) oder eine rationale Zahl, insbesondere größer 1, ( $x \in \mathbb{Q}$ ). Wenn x eine nicht-ganze Zahl ist, ändert sich die Stellung der Düse nach jeder vollen Armumdrehung, so dass die die Düse verlassende Reinigungs-Fluid-Strömung nach jeder Armumrundung eine andere Richtung hat, so dass jedes oder nahezu jedes Flächenelement des Werkstücks und des Gehäuseinneren angeströmt werden. Alternativ kann während einer Umdrehung der Düsenrotation eine einstellbare konstante oder eine einstellbare veränderbare oder eine nicht einstellbare variable oder beliebige Anzahl von Umdrehungen der Armrotation erfolgen. So können beispielsweise bei einer Düsenumdrehung y Armumdrehungen vorgesehen sein ( $y \in \mathbb{N}$ oder $y \in \mathbb{Q}$ ).
Bevorzugt hat die Stellung der Düse am Düsenarm nach einer Umdrehung des Düsenarms einen geringen (Winkel-)Versatz gegenüber ihrer Stellung vor der Düsenarm-Umdrehung, wodurch bei mehreren Umdrehungen ein großer Winkelbereich der Strömungsrichtungen der Reinigungsfluid-Strömung abgedeckt wird.
Durch die hierin beschriebene Rotations-Konfiguration wird das Werkstück aus einer Vielzahl von Richtungen, insbesondere allen Richtungen, angeströmt und somit effizient und gründlich in besonders kurzer Zeit gereinigt. Die Kopplung zwischen Düsenrotation und Armrotation kann auch chaotisch sein, d. h. ungeordnet respektive nicht-deterministisch, so dass die Düse um die Düsen-Rotationsache gewissermaßen "wirbelt", während der Düsenarm mit vergleichsweise konstanter oder, insbesondere variabel bestimmbarer, Rotationsgeschwindigkeit um die Arm-Rotationsachse rotiert. Bei der Rotation von Düse und/oder Arm kann während eines Reinigungszyklus zumindest eine Richtungsumkehr einer oder beider Rotations-Richtungen (Düse/Arm) vorgesehen sein.
Es kann vorgesehen sein, dass das Koppeln der Düsenrotation und Arm-Bewegung und/oder Armrotationen mechanisch und/oder elektronisch erfolgt, insbesondere mittels einer Steuerungseinrichtung. An oder in dem Düsenarm kann zumindest ein Getriebe angeordnet sein, welches die Bewegung des Düsenarms über- oder untersetzt in eine Bewegung der Düse. Der Düsenarm kann mit einem, vorzugsweise steuerbaren, (Arm-)Motor angetrieben werden. Der Antrieb der Düsenrotation kann mittels Getriebe durch den Motor des Düsenarms erfolgen oder durch einen separaten (Düsen-)Motor. Die Rotation der Düse kann auch durch (strömungsmechanische) Kräfte erfolgen, die durch die Strömung des Reinigungsfluids gebildet werden.

Die Düse kann als Doppel- oder Mehrfachdüse gebildet sein. Beispielsweise kann am Düsenarm endseitig eine Doppeldüse vorgesehen sein, die auf der einen Armseite eine erste Fluid-Strömung erzeugt und auf der gegenüberliegenden Seite eine zweite Strömung. Die Richtungen der Strömungen können unterschiedlich sein, insbesondere unterschiedlich variierbar. Mit Doppel- oder Mehrfachdüse werden noch mehr Fluid-Strömungsrichtungen erzeugt, was die Entpulverung optimiert, insbesondere beschleunigt.

Der oder die Winkel, unter dem/denen die Reinigungsfluid-Strömung die Düse verlässt, kann in oder an oder mittels der Düse einstellbar respektive justierbar sein, insbesondere durch Änderung des Winkels zwischen rotierbarer Düse und rotierbarem und/oder bewegbarem Düsenarm.

Erfindungsgemäß ist vorgesehen, dass die Werkstückhalterung im Gehäuseinneren bewegbar, insbesondere verschiebbar und/oder verschwenkbar und/oder drehbar ist. Es kann ferner ein Werkstück-Aktuator vorgesehen sein, mit dem das Werkstück in oder auf der Werkstückhalterung während eines Reinigungszyklus bewegbar ist, insbesondere inkrementell bewegbar. Das Werkstück wird so auf jeder Position (beispielsweise auf jeder ‚Höhe' bei vertikaler Verschiebung des Werkstücks) unter jedem (Raum-)Winkel mindestens einmal durch das Reinigungsfluid angeströmt. Dies steigert die Reinigungseffizienz und bewirkt, dass der Reinigungszyklus weniger Zeit beansprucht. Somit können pro Zeiteinheit mehr Werkstücke gereinigt werden. Es kann auch eine Linearverschiebung des Düsenarms vorgesehen sein.

Das Reinigungsfluid ist bevorzugt ein Gas oder Gasgemisch, insbesondere umfassend ein Inertgas. Der Gasdruck kann veränderbar sein, d. h. die Strömungsgeschwindigkeit des Reinigungsfluids kann an die Werkstückgröße respektive -geometrie anpassbar sein. Es kann auch ein festes oder flüssiges Reinigungsfluid vorgesehen sein, etwa eine Flüssigkeit, oder ein Partikel-Strahl.

Es ist zweckmäßig, wenn die Fördervorrichtung zum Entfernen der Fertigungsmaterial-Reste als Vakuumförderer gebildet ist. Da das Reinigungsfluid in dem fluiddichten Gehäuseinneren einen Überdruck bilden kann, wird durch eine Vakuumförderung ein Druckausgleich herbeigeführt.

Die Fördervorrichtung kann fluidisch mit einem Förderanschluss verbunden sein, der so angeordnet ist, dass das zu entfernende, insbesondere überschüssige, granulare und/oder pulvrige Fertigungsmaterial schwerkraftbedingt in Richtung Förderanschluss fließt. Zur Vermeidung eines Fluidstaus oder einer Verstopfung des Anschlusses oder der daran angeordneten Kanäle oder Leitungen kann eine Fluidfluss-Überwachungseinrichtung vorgesehen sein, die insbesondere im Bereich des Förderanschlusses angeordnet ist.

Insbesondere zur Unterstützung der schwerkraftunterstützten Abförderung des (überschüssigen) Fertigungsmaterials kann vorgesehen sein, dass die Position der Reinigungsvorrichtung veränderbar ist, insbesondere verschiebbar, verdrehbar und/oder verschwenkbar. So kann erreicht werden, dass das (überschüssige) Fertigungsmaterial nach unten und zum Anschluss der (Vakuum-)Fördervorrichtung fällt.

Damit die Vorrichtung möglichst unkompliziert in einen Fertigungsprozess integriert werden kann, ist es zweckmäßig, wenn die Reinigungsvorrichtung auf die Werkstückhalterung unter Bildung eines fluiddichten Volumens aufsetzbar ist. Es bedarf daher keines Wechsels einer Werkstückhalterung, vielmehr ist die Werkstückhalterung so beschaffen, dass sie in anderen Prozess-Stufen (Fertigung, Nachbearbeitung, etc.) verwendbar ist.

Zur Verbesserung der Reinigungswirkung kann vorgesehen sein, dass in oder an der Vorrichtung eine Vibrationseinrichtung vorgesehen ist, mit der die Vorrichtung und/oder die Werkstückhalterung und/oder das Werkstück mit zumindest einer Vibration beaufschlagbar ist/sind. Die Vibration kann amplituden- und/oder frequenzmodulierbar sein. Es kann eine Frequenzmodulation vorgesehen sein, bei der zumindest eine Eigen- oder Resonanzfrequenz des Bauteils umfasst ist.

Ein effizientes und kosten- sowie zeit-einsparendes Reinigen eines additiv hergestellten Werkstücks von Fertigungsmaterialrückständen gelingt ferner mit einem Reinigungsverfahren nach Anspruch 17. Bei dem Verfahren ist vorgesehen, dass das Werkstück in einer Reinigungsvorrichtung, insbesondere in einer hierin beschriebenen Reinigungsvorrichtung, angeordnet wird. Das Werkstück wird während eines Reinigungszyklus, bei dem Werkstück und/oder Gehäuseinneres von, insbesondere überschüssigem, Fertigungsmaterial gereinigt werden, von einem Reinigungsfluid angeströmt, welches aus zumindest einer bewegbaren Düse strömt, welche an zumindest einem bewegbaren Düsenarm angeordnet ist. Das Werkstück und das Gehäuseinnere der Vorrichtung werden während eines Reinigungszyklus mit zumindest einer Reinigungsfluid-Strömung beaufschlagt. Dabei ist zumindest eine Düsenrotation vorgesehen, bei der die zumindest eine Düse um zumindest eine Düsen-Rotationsachse relativ zum Düsenarm rotiert, sowie zumindest eine Arm-Bewegung und/oder Armrotation, bei der der Düsenarm sich entlang zumindest einer Arm-Bahn relativ zur Werkstückhalterung bewegt und/oder um zumindest eine Arm-Rotationsachse relativ zur Werkstückhalterung rotiert. Erfindungsgemäß unterscheiden sich die Orientierungen der Düsen-Rotationsachse und der Arm-Rotationsachse. Die Rotationsgeschwindigkeiten von Düsenrotation und Geschwindigkeit der Arm-Bewegung und/oder die Armrotation sind so gebildet, dass während eines Reinigungszyklus die Reinigungsfluid-Strömung alle oder nahezu alle Strömungsrichtungen innerhalb des Gehäuseinneren annimmt, sodass die gesamte oder nahezu gesamte Oberfläche des Werkstücks und des Gehäuseinneren mit der Reinigungs-Strömung beaufschlagt werden.

Ein effizientes und kosten- sowie zeit-einsparendes Reinigen eines additiv hergestellten Werkstücks von Fertigungsmaterialrückständen gelingt ferner mit einem additiven Fertigungsverfahren nach Anspruch 18. Bei dem Verfahren wird ein Werkstück aus einem granularen und/oder pulvrigen Fertigungsmaterial gefertigt und es wird anschließend gemäß einem hierin beschriebenen Reinigungsverfahren gereinigt.

Die vorgenannten sowie die beanspruchten und in den Ausführungsbeispielen beschriebenen erfindungsgemäß zu verwendenden Bauteile unterliegen in ihrer Größe, Formgestaltung, Materialauswahl und technischen Konzeption keinen besonderen Ausnahmebedingungen, so dass die in dem Anwendungsgebiet bekannten Auswahlkriterien uneingeschränkt Anwendung finden können.

Weitere Einzelheiten, Merkmale und Vorteile des Gegenstandes der Erfindung ergeben sich aus den Unteransprüchen, sowie aus der nachfolgenden Beschreibung und der zugehörigen Zeichnung, in der - beispielhaft - ein Ausführungsbeispiel einer Entpulverungsvorrichtung dargestellt ist. Auch einzelne Merkmale der Ansprüche oder der Ausführungsformen können mit anderen Merkmalen anderer Ansprüche und Ausführungsformen kombiniert werden.

KURZBESCHREIBUNG DER FIGUREN

In der Zeichnung zeigen

Fig. 1 eine Reinigungsvorrichtung in schematischer seitlicher Ansicht,

Fig. 2A/B eine Reinigungsvorrichtung mit Baukammer und Werkstück in verschiedenen seitlichen schematischen Ansichten,

Fig. 3 eine Baukammer mit Werkstück in seitlicher schematischer Ansicht und

Fig. 4 eine Reinigungsvorrichtung in schematischer Schnittansicht (Aufsicht).

DETAILLIERTE BESCHREIBUNG VON AUSFÜHRUNGSBEISPIELEN

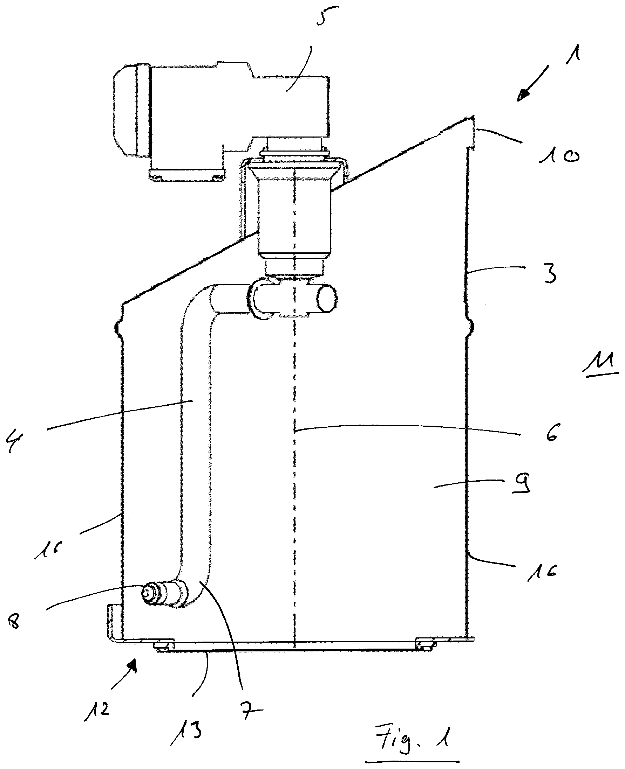

Fig. 1 zeigt in seitlicher schematischer Ansicht eine Reinigungsvorrichtung 1 respektive ein Entpulverungsmodul zum Entpulvern eines additiv gefertigten Werkstücks (2). In dem Gehäuse 3 der Vorrichtung 1 ist ein Düsenarm 4 angeordnet, der über einen Düsenarm-Antrieb 5 um die Düsenarm-Rotationsachse 6 rotierbar ist. Endseitig ist an dem Düsenarm 4 eine Abwinkelung 7 vorgesehen, an der eine rotierbare Düse 8 angeordnet ist. Aus der Düse 8 strömt ein Reinigungsfluid, etwa ein Gas oder Gasgemisch, in das Gehäuseinnere 9. Durch die Fluidströmung werden Fertigungsmaterialreste von einem Werkstück (2), welches in die Vorrichtung 1 gemäß Fig. 1 eingesetzt werden kann, entfernt. Die Fertigungsmaterial-Reste werden aus dem Gehäuseinneren 9 abgesaugt, hierfür ist ein Förderanschluss 10 vorgesehen, an dem ein Vakuum-Fördersystem fluidisch angeordnet werden kann. Im Übrigen ist das Gehäuseinnere 9 fluiddicht, damit keine Fertigungsmaterial-Reste in die Umgebung 11 der Entpulverungsvorrichtung 1 gelangen können.

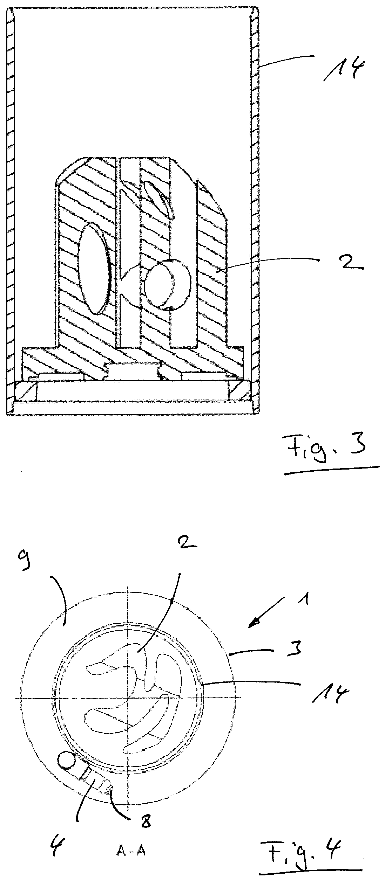

Das Gehäuse 3 kann eine Zylindergeometrie haben, d. h. der Gehäusequerschnitt kann rund sein, was aus der Ansicht gemäß Fig. 4 deutlich wird. An einer Stirnseite 12 des Gehäuses 3 kann eine Öffnung 13 oder Anschlussmöglichkeit für eine Schleuse oder für eine Baukammer (14) vorgesehen sein, durch die das zu reinigende Werkstück in das Gehäuseinnere 9 verbracht werden kann.

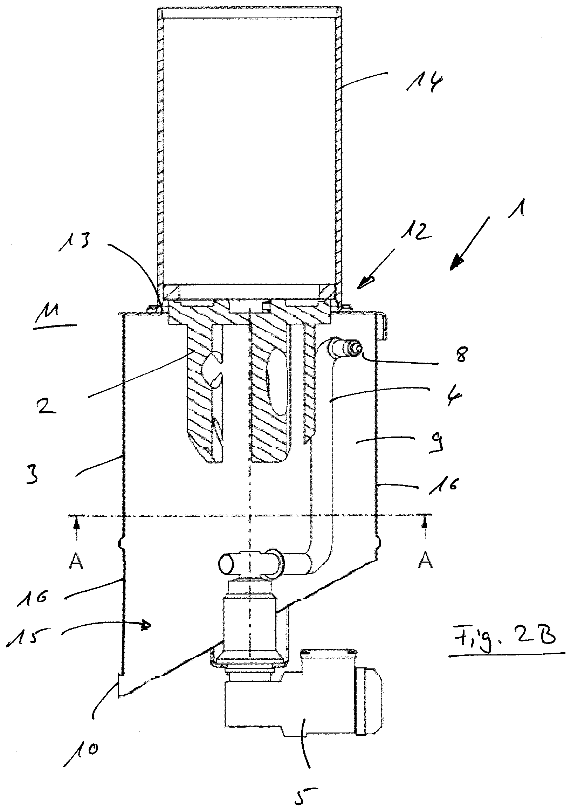

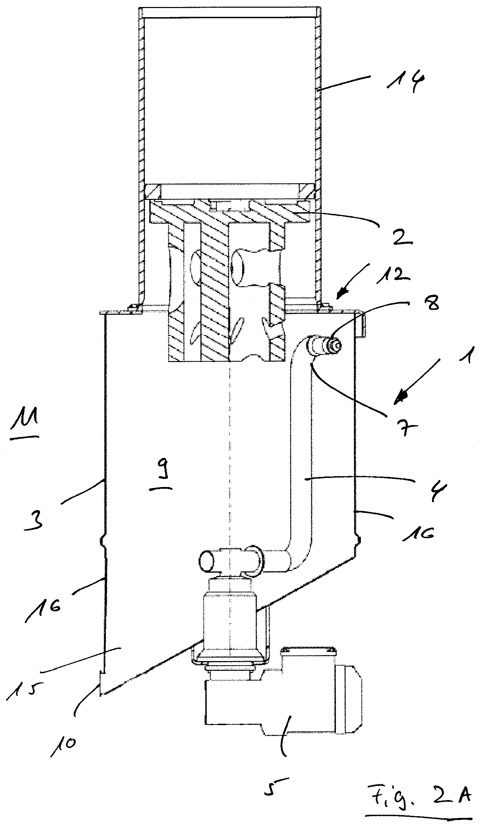

Die Figuren 2A und 2B zeigen ein Entpulverungsmodul 1, an dem eine Werkstückhalterung 14 angeordnet ist, in der ein zu reinigendes Werkstück 2 angeordnet ist.

Die Werkstückhalterung 14 ist in Fig. 3 dargestellt. Das Werkstück 2 wurde zuvor mittels additiver Fertigung aus einem Fertigungsmaterial hergestellt. Fertigungsbedingt haften an dem Werkstück 2 Fertigungsmaterial-Reste an. Durch das Reinigen des Werkstückes 2 in der Reinigungsvorrichtung 1 werden diese Fertigungsmaterial-Reste entfernt. Die Werkstückhalterung 14 bildet eine Baukammer, die so mit dem Gehäuse 3 der Reinigungsvorrichtung 1 verbunden wird, dass das Volumen der Baukammer 14 und das Gehäuseinnere 9 fluiddicht miteinander verbunden sind. Prinzipiell kann die Reinigungsvorrichtung 1 auf die Baukammer 14 aufgestülpt respektive aufgesetzt sein.

Das Werkstück 2 ist innerhalb der Werkstückhalterung 14 linear entlang der Richtung der Rotationsachse 6 verschiebbar, was eine Zusammenschau der Figuren 2A und 2B verdeutlicht. Es vorgesehen sein, dass die Halterung 14 (Bauplatte) während der Entpulverung hin- und her-bewegt wird. Gemäß Fig. 2A befindet sich das Werkstück 2 zum Teil in dem Gehäuseinneren 9, gemäß Fig. 2B ist das zu reinigende Werkstück 2 vollständig im Gehäuseinneren 9 angeordnet.

Das Reinigen des Werkstücks 2 erfolgt dadurch, dass der Düsenarm 4 mit der rotierenden Düse 8, aus der das Reinigungsfluid herausströmt, durch Rotation um die Düsenarm-Rotationsachse 6 um das Werkstück 2 herum geführt wird. Während dieser Rotationen (Arm 4 und Düse 8) wird das Werkstück 2 linear bewegt, etwa mit einem Aktuator, der inkrementelles Verschieben des Werkstücks 2 bewirkt. Auf diese Weise wird jedes Flächenelement des zu reinigenden Werkstücks 2 während eines Reinigungszyklus mit einer Fluidströmung beaufsachlagt. Bei einem Reinigungszyklus macht der Düsenarm 4 mehrere Umdrehungen um das Werkstück 2 und die Düse 8 macht pro Düsenarm-Umdrehung mehrere respektive eine Vielzahl von Umdrehungen um die Düsen-Rotationsachse. Die Düsen-Rotationsachse steht nahezu senkrecht auf der Düsenarm-Rotationsachse 6. Der Winkel, unter dem das Fluid die Düse 8 verlässt, kann durch Schwenken respektive Justieren der Düse 8 veränderbar sein. Dort wo das Werkstück 2 angeströmt wird, wird überschüssiges, an dem Werkstück 2 anhaftendes Fertigungsmaterial entfernt und gelangt in das Gehäuseinnere 9 der Reinigungsvorrichtung 1. Von dort wird es durch ein Vakuum-Fördersystem aus dem Gehäuseinneren 9 entfernt.

Damit das Absaugen des überschüssigen und daher zu entfernenden Fertigungsmaterials effizient gelingt, ist der Anschluss 10 des Vakuum-Förderers in einer Senke 15 des Gehäuses 3 angeordnet. Schwerkraftbedingt fallen die Fertigungsmaterial-Reste in Richtung Förderanschluss 10 des Vakuum-Förderers. Durch die Trichterform der Gehäusestirnseite wird dies begünstigt.

Indem bei der Bewegung der Düse 8 zumindest zwei Rotationsachsen vorgesehen sind, wird nicht nur das Werkstück 2 mit dem Reinigungsfluid angeströmt sondern auch die Gehäusewand 16 des Gehäuseinneren 9. Somit wird auch das Gehäuseinnere 9 von Fertigungsmaterial-Rückständen gereinigt. Damit wird einerseits ein Rückstauben auf das Werkstück 2 vermieden, andererseits eine Kreuzkontamination beim Reinigen eines ersten Werkstücks 2 aus einem ersten Fertigungsmaterial und anschließendem Reinigen eines zweiten Werkstücks 2 aus einem zweiten, sich von dem ersten unterscheidenden, Fertigungsmaterial.

BEZUGSZEICHENLISTE

1    Reinigungsvorrichtung / Entpulvermodul
2    Werkstück
3    Gehäuse
4    Düsenarm
5    Düsenarm-Antrieb
6    Düsenarm-Rotationsachse
7    Abwinkelung
8    Düse
9    Gehäuseinneres
10   Förderanschluss
11   Umgebung
12   Stirnseite
13   Öffnung
14   Werkstückhalterung / Baukammer
15   Senke
16   Gehäusewand

**Patentansprüche**

**1.** Vorrichtung (1) geeignet zum Reinigen eines mittels additiver Fertigung aus einem granularen und/oder pulvrigen Fertigungsmaterial gefertigten Werkstücks (2) und/oder geeignet zum Entfernen von überschüssigem granularem und/oder pulvrigem Fertigungsmaterial nach einer additiven Werkstückfertigung, wobei

die Vorrichtung (1) ein Gehäuse (3) umfasst, in dem eine Werkstückhalterung (14) angeordnet ist, auf dem oder an der das gefertigte Werkstück (2) anordbar ist,
in oder an dem Gehäuse (3) zumindest eine Fördervorrichtung zum Abfördern von überschüssigem Fertigungsmaterial aus dem Gehäuseinneren (9) angeordnet ist, und
in dem Gehäuseinneren (9) zumindest eine bewegbare Düse (8) an zumindest einem bewegbaren Düsenarm (4) angeordnet ist, sodass das Werkstück (2) und das Gehäuseinnere (9) während eines Reinigungszyklus, bei dem Werkstück (2) und/oder Gehäuseinneres (9) von überschüssigem Fertigungsmaterial gereinigt werden, mit zumindest einer Reinigungsfluid-Strömung beaufschlagbar ist,
wobei
an dem Düsenarm (4) endseitig eine Abwinkelung (7) vorgesehen ist, an der die bewegbare Düse (8) angeordnet ist,
zumindest eine Düsenrotation vorgesehen ist, bei der die Düse (8) um zumindest eine Düsen-Rotationsachse relativ zum Düsenarm (4) rotierbar ist, und
zumindest eine Arm-Rotation, vorgesehen ist, bei der der Düsenarm (4) um eine Arm-Rotationsachse (6) relativ zur Werkstückhalterung (14) rotierbar ist,

wobei die Rotationsgeschwindigkeit der Düsenrotation und die Geschwindigkeit der Armbewegung so gebildet sind, dass während eines Reinigungszyklus die Reinigungsfluid-Strömung alle oder nahezu alle Strömungsrichtungen innerhalb des Gehäuseinneren (9) annimmt, sodass die gesamte oder nahezu gesamte Oberfläche des Werkstücks (2) und des Gehäuseinneren (9) direkt mit der Reinigungs-Strömung aus allen oder nahezu allen Richtungen beaufschlagbar ist,
wobei sich die Orientierungen der Düsen-Rotationsachse und der Arm-Rotationsachse (6) unterscheiden,
wobei die Düse (8) pro Düsenarm-Umdrehung eine Vielzahl von Umdrehungen macht, und
wobei die Werkstückhalterung (14) im Gehäuseinneren (9) verschiebbar, oder verschwenkbar, oder drehbar, oder verschieb- und verschwenkbar, oder verschiebbar und drehbar, oder verschwenkbar und drehbar, oder verschiebbar und verschwenkbar und drehbar ist.

2. Reinigungsvorrichtung (1) nach Anspruch 1, **dadurch gekennzeichnet, dass** die Arm-Bewegung bewirkt, dass sich die rotierende Düse (8) entlang einer runden, kreisrunden, ovalen, rechteckigen oder nahezu rechteckigen oder frei geformten Bahn um die Werkstückhalterung (14) und zwischen Werkstückhalterung (14) und Gehäusewand (16) bewegt.

3. Reinigungsvorrichtung (1) nach einem der Ansprüche 1 oder 2, **dadurch gekennzeichnet, dass** Düsenrotation und Arm-Bewegung gekoppelt sind,

sodass während einer Umdrehung der Armbewegung eine einstellbare konstante oder eine einstellbare veränderbare oder eine nicht einstellbare variable oder beliebige Anzahl von Umdrehungen der Düsenrotation erfolgen, oder sodass während einer Umdrehung der Düsenrotation eine einstellbare konstante oder eine einstellbare veränderbare oder eine nicht einstellbare variable oder beliebige Anzahl von Umdrehungen der Armbewegung erfolgen.

4. Reinigungsvorrichtung (1) nach Anspruch 3, **dadurch gekennzeichnet, dass** das Koppeln der Düsenrotation und der Arm-Bewegung mechanisch erfolgt.

5. Reinigungsvorrichtung (1) nach einem der Ansprüche 1 bis 4, **dadurch gekennzeichnet, dass** das Koppeln der Düsenrotation und der Arm-Bewegung elektronisch mittels einer Steuereinrichtung erfolgt.

6. Reinigungsvorrichtung (1) nach einem der Ansprüche 1 bis 5, **dadurch gekennzeichnet, dass** an oder in dem Düsenarm (4) zumindest ein Getriebe angeordnet ist, welches die Bewegung des Düsenarms (4) über- oder untersetzt in eine Bewegung der Düse (8).

7. Reinigungsvorrichtung (1) nach einem der Ansprüche 1 bis 6, **dadurch gekennzeichnet, dass** die Düse (8) als rotierende Doppel- oder Mehrfachdüse gebildet ist.

8. Reinigungsvorrichtung (1) nach einem der Ansprüche 1 bis 7, **dadurch gekennzeichnet, dass**

der oder die Winkel, unter dem/denen die Reinigungsfluid-Strömung die Düse (8) verlässt, in oder an oder mittels der Düse (8) einstellbar ist, oder

dass der oder die Winkel, unter dem/denen die Reinigungsfluid-Strömung die Düse (8) verlässt, in oder an oder mittels der Düse (8) durch Änderung des Winkels zwischen rotierbarer Düse (8) und bewegbarem Düsenarm (4) einstellbar ist.

9. Reinigungsvorrichtung (1) nach einem der Ansprüche 1 bis 8, **gekennzeichnet durch** einen Werkstück-Aktuator, mit dem das Werkstück (2) in oder auf der Werkstückhalterung (14) während eines Reinigungszyklus inkrementell bewegbar ist.

10. Reinigungsvorrichtung (1) nach einem der Ansprüche 1 bis 9, **dadurch gekennzeichnet, dass** die Fördervorrichtung als Vakuumförderer gebildet ist.

11. Reinigungsvorrichtung (1) nach einem der Ansprüche 1 bis 10, **dadurch gekennzeichnet, dass** die Fördervorrichtung fluidisch mit einem Förderanschluss (10) verbunden ist, der so angeordnet ist, dass das zu entfernende überschüssige granulare und/oder pulvrige Fertigungsmaterial schwerkraftbedingt in Richtung Förderanschluss (10) fließt.

12. Reinigungsvorrichtung (1) nach einem der Ansprüche 1 bis 11, **dadurch gekennzeichnet, dass** im Bereich des Förderanschlusses (10) eine Fluidfluss-Überwachungseinrichtung angeordnet ist.

13. Reinigungsvorrichtung (1) nach einem der Ansprüche 1 bis 12, **dadurch gekennzeichnet, dass** die Position der Vorrichtung (1) veränderbar ist.

14. Reinigungsvorrichtung (1) nach Anspruch 13, **dadurch gekennzeichnet, dass**
die Position der Vorrichtung verschiebbar, oder verdrehbar, oder verschwenkbar, oder verschieb- und verdrehbar, oder verschieb- und verschwenkbar, oder verdreh- und verschwenkbar, oder verschieb- und verdreh- und verschwenkbar ist.

15. Reinigungsvorrichtung (1) nach einem der Ansprüche 1 bis 14, **dadurch gekennzeichnet, dass** die Vorrichtung (1) auf die Werkstückhalterung (14) unter Bildung eines fluiddichten Volumens aufsetzbar ist.

16. Reinigungsvorrichtung (1) nach einem der Ansprüche 1 bis 15, **dadurch gekennzeichnet, dass** in oder an der Vorrichtung (1) eine Vibrationseinrichtung vorgesehen ist, mit der die Vorrichtung (1), die Werkstückhalterung (14), und/oder das Werkstück (2) mit zumindest einer Vibration beaufschlagbar ist/sind.

17. Verfahren zum Reinigen eines mittels additiver Fertigung aus einem granularen und/oder pulvrigen Fertigungsmaterial gefertigten Werkstücks (2) und/oder

zum Entfernen von überschüssigem granularem und/oder pulvrigem Fertigungsmaterial nach einer additiven Werkstückfertigung, wobei das Werkstück in einer Reinigungsvorrichtung, insbesondere einer Reinigungsvorrichtung (1) nach einem der Ansprüche 1 bis 16, angeordnet wird, und wobei das Werkstück während eines Reinigungszyklus, bei dem Werkstück und/oder Gehäuseinneres (9) von überschüssigem Fertigungsmaterial gereinigt werden, von einem Reinigungsfluid angeströmt wird, welches aus zumindest einer bewegbaren Düse (8) strömt, welche an zumindest einem bewegbaren Düsenarm (4) angeordnet ist, sodass das Werkstück und das Gehäuseinnere der Vorrichtung während eines Reinigungszyklus mit zumindest einer Reinigungsfluid-Strömung beaufschlagt werden, wobei

zumindest eine Düsenrotation vorgesehen ist, bei der die Düse um zumindest eine Düsen-Rotationsachse relativ zum Düsenarm rotiert,

zumindest eine Arm-Rotation vorgesehen ist, bei der der Düsenarm um zumindest eine Arm-Rotationsachse relativ zu einer Werkstückhalterung (14) rotiert und

die Rotationsgeschwindigkeiten von Düsenrotation und Geschwindigkeit der Arm-Bewegung so gebildet sind, dass während eines Reinigungszyklus die Reinigungsfluid-Strömung alle oder nahezu alle Strömungsrichtungen innerhalb des Gehäuseinneren annimmt, sodass die gesamte oder nahezu gesamte Oberfläche des Werkstücks und des Gehäuseinneren direkt mit der Reinigungs-Strömung beaufschlagt werden,

wobei sich die Orientierungen der Düsen-Rotationsachse und der Arm-Rotationsachse unterscheiden,

wobei die Düse pro Düsenarm-Umdrehung eine Vielzahl von Umdrehungen macht, und

wobei die Werkstückhalterung im Gehäuseinneren verschiebbar, oder verschwenkbar, oder drehbar, oder verschieb- und verschwenkbar, oder verschiebbar und drehbar, oder verschwenkbar und drehbar, oder verschiebbar und verschwenkbar und drehbar ist.

18. Additives Fertigungsverfahren zum Fertigen eines Werkstücks aus einem granularen und/oder pulvrigen Fertigungsmaterial, **gekennzeichnet durch** ein Reinigungsverfahren nach Anspruch 17.

## Claims

1. A device (1) suitable for cleaning a workpiece manufactured by means of additive manufacturing from a granular and/or powdery manufacturing material (2) and/or suitable for removing excess granular and/or powdery manufacturing material after manufacturing the additive workpiece, wherein

the device (1) comprises a housing (3) in which a workpiece holder (14) is arranged, at or on which the manufactured workpiece (2) can be arranged,

at least one conveyor device is arranged in or on the housing (3) for removing excess manufacturing material from the inside of the housing (9), and

at least one moveable nozzle (8) is arranged on at least one moveable nozzle arm (4) in the inside of the housing (9) so that at least one cleaning fluid flow can be applied to the workpiece (2) and the inside of the housing (9) during a cleaning cycle in which the workpiece (2) and/or the inside of the housing (9) are cleaned of excess manufacturing material,

wherein,

an angle (7) is provided at the end of the nozzle arm (4), on which the moveable nozzle (8) is arranged,

at least one nozzle rotation is provided in which the nozzle (8) can be rotated about at least one nozzle rotational axis relative to the nozzle arm (4), and

at least one arm rotation is provided, in which the nozzle arm (4) can be rotated around an arm rotational axis (6) relative to the workpiece holder (14),

wherein the rotation speed of the nozzle rotation and the speed of the arm movement are designed in such a way that, during a cleaning cycle, the cleaning fluid flow assumes all or almost all flow directions within the housing (9) so that the entire or almost the entire surface of the workpiece (2) and the housing (9) can be directly affected by the cleaning flow from all or almost all directions,

wherein the orientations of the nozzle rotational axis and the arm rotational axis (6) differ,

wherein the nozzle (8) undergoes a multitude of revolutions per nozzle arm revolution, and

wherein the workpiece holder (14) inside the housing (9) can be moved, or swivelled, or rotated, or moved and swivelled, or moved and rotated, or swivelled and rotated, or moved and swivelled and rotated, or could be moved and swivelled and rotated.

2. The cleaning device (1) according to Claim 1, **char-**

acterized in that the arm movement causes the rotating nozzle (8) to move along a round, circular, oval, rectangular or almost rectangular or free-formed path around the workpiece holder (14) and between the workpiece holder (14) and the housing wall (16).

3. The cleaning device (1) according to any one of the Claims 1 or 2, **characterized in that** nozzle rotation and arm movement are coupled

> so that during one revolution of the arm movement there is an adjustable constant, or an adjustable variable or a non-adjustable variable or any number of revolutions of the nozzle rotation, or
> so that, during one revolution of the nozzle rotation, there is an adjustable constant or an adjustable, changeable or a non-adjustable variable or any number of revolutions of the arm movement.

4. The cleaning device (1) according to Claim 3, **characterized in that** the coupling of the nozzle rotation and the arm movement is mechanical.

5. The cleaning device (1) according to any one of the Claims 1 to 4, **characterized in that** the coupling of the nozzle rotation and the arm movement is carried out electronically by means of a control device.

6. The cleaning device (1) according to any one of the Claims 1 to 5, **characterized in that** at least one gearbox is arranged on or in the nozzle arm (4) which reduces or transmits the movement of the nozzle arm (4) into a movement of the nozzle (8).

7. The cleaning device (1) according to any one of the Claims 1 to 6, **characterized in that** the nozzle (8) is designed as a rotating double or multiple nozzle.

8. The cleaning device (1) according to any one of the Claims 1 to 7, **characterized in that**

> the angle(s) at which the cleaning fluid flow leaves the nozzle (8) is adjustable in or on or by means of the nozzle (8), or
> that the angle(s) at which the cleaning fluid flow leaves the nozzle (8) is adjustable in or on or by means of the nozzle (8) by changing the angle between the rotatable nozzle (8) and the moveable nozzle arm (4).

9. The cleaning device (1) according to any one of the Claims 1 to 8, **characterized by** a workpiece actuator via which the workpiece (2) can be moved incrementally in or on the workpiece holder (14) during a cleaning cycle.

10. The cleaning device (1) according to any one of the Claims 1 to 9, **characterized in that** the conveyor is designed as a vacuum conveyor.

11. The cleaning device (1) according to any one of the Claims 1 to 10, **characterized in that** the conveyor is fluidically connected to a conveyor port (10) which is arranged in such a way that the excess granular and/or powdery manufacturing material to be removed flows in the direction of the conveyor port (10) due to gravity.

12. The cleaning device (1) according to any one of the Claims 1 to 11, **characterized in that** a fluid flow monitoring device is located in the area of the conveyor connection (10).

13. The cleaning device (1) according to any one of the Claims 1 to 12, **characterized in that** the position of device (1) can be changed.

14. The cleaning device (1) according to Claim 13, **characterized in that** the position of the device can be moved, or rotated, or swivelled, or displaced and twisted, or displaced and pivoted, or twisted and pivoted, or displaced and twisted and pivoted.

15. The cleaning device (1) according to any one of the Claims 1 to 14, **characterized in that** the device (1) can be placed on the workpiece holder (14) to form a fluid-tight volume.

16. The cleaning device (1) according to any one of the Claims 1 to 15, **characterized in that** a vibration device is provided in or on the device (1) by means of which at least one vibration can be applied to the device (1), the workpiece holder (14), and/or the workpiece (2).

17. A method for cleaning a workpiece made of a granular and/or powdery manufacturing material by means of additive manufacturing (2), and/or

> for the removal of excess granular and/or powdery manufacturing material after additive workpiece production, wherein
> the workpiece is arranged in a cleaning device, in particular, in a cleaning device (1) according to one of the Claims 1 to 16, and wherein
> during a cleaning cycle, in which the workpiece and/or the inside of the housing (9) are cleaned of excess manufacturing material, a cleaning fluid flowing from at least one moveable nozzle (8), which is located on at least one moveable nozzle arm (4), flows onto the workpiece so that at least one flow of cleaning fluid is applied to the workpiece and the inside of the housing of the device during a cleaning cycle, wherein

at least one nozzle rotation is provided in which the nozzle rotates around at least one nozzle rotational axis relative to the nozzle arm,

at least one arm rotation is provided, in which the nozzle arm rotates about at least one arm rotational axis relative to a workpiece holder (14) and

the rotation speeds of nozzle rotation and speed of arm movement are designed in such a way that during a cleaning cycle the cleaning fluid flow assumes all or almost all flow directions within the inside of the housing so that the cleaning flow directly applies the cleaning flow to the entire or almost all surface of the workpiece and the inside of the housing,

wherein the orientations of the nozzle rotational axis and the arm rotational axis differ,

wherein the nozzle undergoes a multitude of revolutions per nozzle arm revolution, and

wherein the workpiece holder inside the housing can be moved, or swivelled, or rotated, or moved and swivelled, or moved and rotated, or swivelled and rotated, or moved and swivelled and rotated.

18. An additive manufacturing method for producing a workpiece from a granular and/or powdery manufacturing material, **characterized by** a cleaning method according to Claim 17.

## Revendications

1. Dispositif (1) adapté au nettoyage d'une pièce (2) fabriquée au moyen d'une fabrication additive composée d'un matériau de fabrication granulaire et/ou pulvérulent et/ou adapté pour éliminer du matériau de fabrication excédentaire aire granulaire et/ou pulvérulent après une fabrication de pièces additive,

sachant que le dispositif (1) comprend un boîtier (3), dans lequel est disposé un support de pièce (14) sur lequel ou près duquel la pièce fabriquée (2) peut être disposée,

au moins un dispositif de transport pour transporter du matériau de fabrication excédentaire depuis l'intérieur du boîtier (9) est disposé dans ou près du boîtier (3), et

au moins une buse mobile (8) est disposée sur au moins un bras de buse (4) pouvant être mobile à l'intérieur de boîtier (9) de telle manière que la pièce (2) et l'intérieur de boîtier (9) sont frappés par au moins un écoulement de fluide de nettoyage, pendant un cycle de nettoyage, lors duquel la pièce (2) et/ou l'intérieur de boîtier (9) sont nettoyés du matériau de fabrication excédentaire,

sachant qu'une angularité (7) est prévue en extrémité sur le bras de buse (4) sur lequel est disposée la buse (8) pouvant être mobile,

au moins une rotation de buse est prévue lors de laquelle la buse (8) peut être tournée autour d'au moins un axe de rotation de buse par rapport au bras de buse (4), et

au moins une rotation de bras est prévue, lors de laquelle le bras de buse (4) peut être tourné autour d'un axe de rotation de bras (6) par rapport au support de pièce (14),

sachant que la vitesse de rotation de la rotation de buse et la vitesse de déplacement de bras sont formées de telle manière que pendant un cycle de nettoyage, l'écoulement de fluide de nettoyage adopte toutes ou à peu près toutes les directions d'écoulement à l'intérieur de l'intérieur de boîtier (9) de telle sorte que toute ou presque toute la surface de la pièce (2) et de l'intérieur du boîtier (9) sont directement frappés par l'écoulement de nettoyage depuis toutes ou presque toutes les directions,

sachant que les orientations de l'axe de rotation de buse et de l'axe de rotation de bras (6) sont différentes,

sachant que la buse (8) effectue une pluralité de révolutions par révolution de bras de buse, et

sachant que le support de pièce (14) peut être déplacé, ou pivoté, ou tourné, ou déplacé et pivoté, ou déplacé et tourné, ou pivoté et tourné, ou déplacé et pivoté et tourné à l'intérieur de boîtier (9).

2. Dispositif de nettoyage (1) selon la revendication 1, **caractérisé en ce que** le déplacement de bras fait en sorte que la buse en rotation (8) se déplace le long d'une trajectoire ronde, circulaire, ovale, rectangulaire ou presque rectangulaire ou librement formée autour du support de pièce (14) et entre le support de pièce (14) et la paroi de boîtier (16).

3. Dispositif de nettoyage (1) selon l'une quelconque des revendications 1 ou 2, **caractérisé en ce que** la rotation de buse et le déplacement de bras sont couplés,

de telle manière que pendant une révolution de déplacement de bras a lieu un nombre réglable constant ou réglable modifiable ou non réglable variable ou quelconque de révolutions de la rotation de buse, ou

de telle manière que pendant une révolution de la rotation de buse a lieu un nombre réglable constant ou réglable modifiable ou non réglable variable ou quelconque de révolutions du déplacement de bras.

4. Dispositif de nettoyage (1) selon la revendication 3, **caractérisé en ce que** le couplage de la rotation de buse et le déplacement de bras a lieu de façon mécanique.

5. Dispositif de nettoyage (1) selon l'une quelconque des revendications 1 à 4, **caractérisé en ce que** le couplage de la rotation de buse et du déplacement de bras a lieu de façon électronique au moyen d'un système de commande.

6. Dispositif de nettoyage (1) selon l'une quelconque des revendications 1 à 5, **caractérisé en ce qu'**au moins une transmission est disposée sur ou dans le bras de buse (4), laquelle convertit ou réduit le déplacement du bras de buse (4) en un déplacement de la buse (8).

7. Dispositif de nettoyage (1) selon l'une quelconque des revendications 1 à 6, **caractérisé en ce que** la buse (8) est formée sous la forme d'une buse double ou multiple.

8. Dispositif de nettoyage (1) selon l'une quelconque des revendications 1 à 7, **caractérisé en ce que**

> le ou les angles sous lequel/lesquels l'écoulement du fluide de nettoyage quitte la buse (8), peut/peuvent être réglé(s) dans ou sur ou au moyen de la buse (8), ou
> **en ce que** le ou les angles, sous lequel/lesquels l'écoulement du fluide de nettoyage quitte la buse (8), peut/peuvent être réglé(s) dans ou sur ou au moyen de la buse (8) par modification de l'angle entre la buse (8) pouvant tourner et le bras de buse mobile (4).

9. Dispositif de nettoyage (1) selon l'une quelconque des revendications 1 à 8, **caractérisé par** un actionneur de pièce avec lequel la pièce (2) peut être progressivement déplacée dans ou sur le support de pièce (14) pendant un cycle de nettoyage.

10. Dispositif de nettoyage (1) selon l'une quelconque des revendications 1 à 9, **caractérisé en ce que** le dispositif de transport est formé sous la forme d'un convoyeur sous vide.

11. Dispositif de nettoyage (1) selon l'une quelconque des revendications 1 à 10, **caractérisé en ce que** le dispositif de transport est relié de façon fluidique à un raccord de transport (10), qui est disposé de telle sorte que le matériau de fabrication granulaire et/ou pulvérulent excédentaire à enlever s'écoule selon la gravité en direction du raccord de transport (10).

12. Dispositif de nettoyage (1) selon l'une quelconque des revendications 1 à 11, **caractérisé en ce qu'**un système de contrôle d'écoulement de fluide est disposé dans la zone du raccord de transport (10).

13. Dispositif de nettoyage (1) selon l'une quelconque des revendications 1 à 12, **caractérisé en ce que** la position du dispositif (1) peut être modifiée.

14. Dispositif de nettoyage (1) selon la revendication 13, **caractérisé en ce que** la position du dispositif peut être déplacée, ou tournée, ou pivotée, ou déplacée et tournée, ou déplacée et pivotée, ou tournée et pivotée, ou déplacée et tournée et pivotée.

15. Dispositif de nettoyage (1) selon l'une quelconque des revendications 1 à 14, **caractérisé en ce que** le dispositif (1) peut être placé sur le support de pièce (14) en formant un volume étanche aux fluides.

16. Dispositif de nettoyage (1) selon l'une quelconque des revendications 1 à 15, **caractérisé en ce qu'**un système de vibrations est prévu dans ou sur le dispositif (1) avec lequel le dispositif (1), le support de pièce (14) et/ou la pièce (2) est/sont sollicité(s) par au moins une vibration.

17. Procédé de nettoyage d'une pièce (2) fabriquée au moyen d'une fabrication additive composée d'un matériau de fabrication granulaire et/ou

> pulvérulent et/ou adapté pour éliminer du matériau de fabrication excédentaire granulaire et/ou pulvérulent après une fabrication de pièces additive,
> sachant que la pièce est disposée dans un dispositif de nettoyage, en particulier un dispositif de nettoyage (1) selon l'une quelconque des revendications 1 à 16, et,
> sachant que la pièce, pendant un cycle de nettoyage, lors duquel la pièce et/ou l'intérieur de boîtier (9) sont nettoyés du matériau de fabrication excédentaire, est balayée par un fluide de nettoyage, lequel s'écoule à partir d'au moins une buse mobile (8), laquelle est disposée sur au moins un bras de buse (4) mobile de telle manière que la pièce et l'intérieur de boîtier du dispositif sont frappés pendant un cycle de nettoyage par au moins un écoulement de fluide de nettoyage, sachant qu'au moins une rotation de buse est prévue, lors de laquelle la buse tourne autour d'au moins un axe de rotation de buse par rapport au bras de buse,
> au moins une rotation de bras est prévue, lors de laquelle la buse tourne autour d'au moins un axe de rotation de buse par rapport au bras de buse,
> au moins une rotation de bras est prévue, lors de laquelle le bras de buse tourne autour d'au moins un axe de rotation de bras par rapport à un support de pièce (14), et
> les vitesses de rotation de rotation de buse et la vitesse du déplacement de bras sont formées de telle manière que pendant un cycle de nettoyage, l'écoulement du fluide de nettoyage adopte à peu près toutes les directions d'écoulement à l'intérieur de l'intérieur de boîtier de telle sorte que toute ou presque toute la surface de la pièce et de l'intérieur du boîtier sont directement frappés par l'écoulement de nettoyage, sachant que les orientations de l'axe de rotation de buse et de l'axe de rotation de bras sont différentes,

sachant que la buse effectue une pluralité de révolutions par révolution de bras de buse, et sachant que le support de pièce à l'intérieur du boîtier peut être déplacé, ou pivoté, ou tourné, ou déplacé et pivoté, ou déplacé et tourné, ou pivoté et tourné, ou déplacé et pivoté et tourné.

18. Procédé de fabrication additive pour la fabrication d'une pièce composée d'un matériau de fabrication granulaire et/ou pulvérulent, **caractérisé par** un procédé de nettoyage selon la revendication 17.

Fig. 1

Fig. 2B

Fig. 2A

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102018118067 A1